# EUROPEAN PATENT APPLICATION

(11) **EP 4 498 309 A1**
(43) Date of publication of application: **29.01.2025**
(21) Application number: 23188407.3
(22) Date of filing: 28.07.2023
(51) Int. Cl.: G06Q 20/36, G06Q 20/32

(54) **SECURE TOKEN TRANSACTION UNIT, TERMINAL, ELECTRONIC PAYMENT TOKEN TRANSACTION SYSTEM AND METHOD OF RELIEVING A SECURE TOKEN TRANSACTION UNIT FROM TIME-CONSUMING CALCULATIONS**

(71) Applicant: Giesecke+Devrient advance52 GmbH, 81677 München (DE)
(72) Inventor: Mantri, Deepen, 81677 München (DE)
(74) Representative: Ter Meer Steinmeister & Partner

(57) **Abstract**

The invention relates to secure token transaction unit 200, such as a secure element or a chip card, within an electronic payment transaction system 100. The token transaction unit 200 is connected or connectable to a terminal 300 by means of which the token transaction unit 200 is in an operative state. The secure token transaction unit 200 comprises a secure communication interface 202 adapted to enable bi-directional data communication between the secure token transaction unit 200 and the terminal 300; a secure memory 204 for storing data; and a control means 206, such as a processor, a microprocessor or a microcontroller, adapted i) to generate a delegation message 208 that at least partially delegates the calculation of a denomination algorithm for selecting a combination of tokens to be used for payment transactions with another transaction unit, thereby reducing a computational load on the secure token transaction unit 200, and ii) to send the delegation message 208 to the terminal 300.

## Description

### Technical field

The invention relates to a to a secure token transaction unit, in particular a secure element, within an electronic payment transaction system. The invention also relates to a terminal, in particular a mobile computing device such as a smartphone or mobile tablet, of an electronic payment transaction system. The invention also relates to an electronic payment token transaction system comprising at least one secure token transaction unit, at least one terminal and at least one communication module. The invention also relates to a method of relieving a secure token transaction unit of an electronic payment transaction system from time-consuming calculations associated with a secure payment transaction.

### Technological background

Tokens - also referred to as digital assets, electronic coins, coin data sets, value notes - may represent any digital asset, in particular a digital currency, preferably a central bank digital currency, short CBDC. These tokens are issued and deleted by an issuing unit of the token transaction system, such as an issuing authority, or a central bank unit or a commercial bank unit, hereinafter also referred to as secure token issuing unit.

There are different technical approaches for exchanging electronic tokens such as a digital asset e.g., digital currency such as CBDC, issued by a central bank within the electronic tokens transaction system.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach, as for instance described in WO 2020 / 212 331 A1, tokens are stored in token transaction units (also called wallets or payment application units or secure elements) to be directly exchanged between users of an electronic payment transaction system. For security-, verification- and registration-purposes, a central token reference register stores token references of all valid tokens without knowing the tokens itself. So, the user can check validity of a received token with dedicated requests send to the token reference register. The token reference register only stores token references of the corresponding token. Tokens can be further modified by each user of the token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

In the evolving world of digital finance, electronic payment systems have become increasingly central to global commerce. These systems typically involve a complex orchestration of devices and technologies that enable the secure and efficient transfer of funds. Computing, data communications and interface interactions all play a key role in facilitating seamless transactions. In essence, the goal is to simplify the digital payment process while ensuring high levels of security, efficiency and user satisfaction.

Despite great progress, a number of challenges remain. The components of such systems are faced with complex computational tasks, which can lead to inefficient operation and potential system latency when low-cost and low-power components are involved. Existing systems have room for improvement in terms of effectively balancing the computational load between the components of such systems.

### Summary of the invention

In view of the above, a secure token transaction unit within an electronic payment transaction system according to claim 1, a terminal of an electronic payment transaction system according to claim 5, an electronic payment token transaction system according to claim 9, global electronic payment token transaction system according to claim 11, a method of relieving a secure token transaction unit of an electronic payment transaction system from time-consuming calculations according to claim 12, and a non-transitory computer readable storage medium according to claim 15 are provided.

An electronic payment system is a secure digital system that facilitates the exchange of value or data between parties, i.e. participants in the electronic payment system, over a network. This may include financial systems for transferring money, e-commerce platforms for buying and selling goods, or any other system where digital transactions are carried out. These systems provide the necessary infrastructure to initiate, process and record token transactions. Examples include digital wallet platforms, online banking systems or blockchain-based payment networks.

A participant in/ user of the electronic payment transaction system associated with an entity such as a secure element, terminal, system or software program involved in the execution of electronic transactions of tokens. The participant may be a natural person, a legal entity, a company or a specific device such as a smartphone, laptop or specialized hardware. It includes a service customer and a service provider entity. Participants interact with each other to perform token transactions, which can range from online payments (purchases) and digital payments to electronic fund transfers and beyond.

A service customer / client is a participant in the electronic payment transaction system accessing services offered by a service provider unit. A service customer is a unit adapted to make online purchases, a company processing digital payments or any other technical entity accessing the services of the transaction system to carry out electronic transactions. The service customer is in most cases the initiator of a transaction, requesting a specific service from a service provider.

A service provider unit is a participant in the electronic payment transaction system that offers services used by service consumers. This may be an e-commerce platform that facilitates online sales, a payment gateway that processes digital payments, a bank that enables electronic token transfers, or any other technical entity that provides the infrastructure or services necessary to carry out electronic transactions. The service provider unit may respond to the service customer's requests and may perform the necessary actions to complete the transaction.

A token is a unit of data or a digital asset or electronic coin representing a unit of value, a digital currency, preferably a central bank digital currency (CBDC), a right to access a service, or a record of ownership. A token representing a digital currency may be issued and deleted by a unit of the transaction system, such as an issuing authority or a central bank unit or a commercial bank unit, hereinafter referred to as a token issuing unit, that is in the present document a secure token issuing unit. A token may be a digital resource, a digital certificate, a single record in a database, and may be used to pay for (purchase) goods and services, to participate in voting or other governance processes, or to receive rewards.

For managing the tokens, such as performing token transactions and storing the tokens, secure token transaction units, also known as token management units, are used.

A secure token transaction unit may be referred to as a wallet, which is a digital container that stores information used to make payments, redeem rewards, or access other services. The secure token transaction unit may be a token transaction unit, which can be used to locally manage the token in a secure element itself, to modify the tokens and to register the token in the electronic transaction system.

The secure token transaction unit, also referred to as a secure account management unit, may be used to manage tokens in a decentralised ledger, such as a blockchain, or a centralised ledger, such as a database, that stores the token centrally in the electronic transaction system. The management, modification and/or registration of the tokens in the electronic transaction system may be initiated by the token transaction unit. The token transaction or token storage may be performed remotely by another secure element or a service provider unit.

Token transaction units can be software-based or hardware-based and can be used to store a variety of information, including tokens, asset values, credit card numbers, loyalty card numbers, boarding pass numbers and other relevant data. A token transaction unit can be implemented as a software application, or as a hardware device, such as a USB drive or a smartcard / chipcard.

A service provider unit can be a financial service provider, such as a commercial bank or a fintech company. Additionally, a service provider unit can be an official authority or a mobile communication service provider unit. It can also be any other regulated or non-regulated party that participates in the electronic transaction system, including a payment transaction involving a central bank digital currency (CBDC) as authorized by the token issuing authority.

Hashing is the process of converting an input of any length into a fixed size string of text using a mathematical algorithm known as hash function. The output, or hash, is virtually unique to each unique input, in that any change to the input, even a small one, will produce a drastically different output hash. Although the process can be reversed, for example by trying all possible inputs to see if they produce a given hash, such a reversal involves the use of computational resources that are very challenging to provide.

The punctuation mark "/" (slash) is understood as "or". The term "or" can also be understood in an explanatory way, for example as "i.e.".

According to an aspect of the invention, a secure token transaction unit is provided within a an electronic payment transaction system. The secure token transaction unit may be a secure element or a chip card.

The token transaction unit is connected or connectable to a terminal, preferably a terminal of the electronic payment transaction system. The terminal may refer to a computing device such as a smartphone, laptop or mobile tablet that is connectable to other devices or networks. In the present context, it is specifically connectable to a secure token transaction unit to perform payment transactions.

By means of the terminal, the token transaction unit is in an operational state, which preferably implies that the terminal provides the token transaction unit with the requirements necessary for the operation of the token transaction unit, such as power supply, physical housing, mechanical protection.

The secure token transaction unit comprises a communication interface adapted to enable bi-directional data communication between the secure token transaction unit and the terminal, and a secure memory for storing data. In particular, the secure communication interface enables the secure token transaction unit to interact with the terminal in a secure manner, thereby enhancing data security during transactions. The benefit is enhanced system security, minimizing potential breaches during data exchange. Especially, the secure memory maintains data integrity by protecting it from unauthorized access or modifications. The benefit is a robust system that can reliably store and retrieve data, increasing trust in the system.

The secure token transaction unit further comprises control means such as a processor, microprocessor or microcontroller. The control means may generally be responsible for ensuring transaction integrity, managing computational tasks and facilitating secure communication between the transaction unit and the terminal.

In an implementation, the control means is adapted to i) generate a delegation message for at least partially delegating the calculation of demanding tasks that require extensive computing resources, such as computing power and/or memory capacity, and ii) send the generated delegation message to the terminal.

In an alternative implementation, the control means is adapted to i) receive a command from the terminal to provide a token information about tokens residing in the secure token transaction unit, the token information includes all information required at the terminal for a calculation of a denomination algorithm for selecting a combination of tokens to be used for payment transactions with another transaction unit, thereby reducing a computational load on the secure token transaction unit, and ii) to send the token information to the terminal.

The token information may be data set that incorporates at least the monetary amount of each token that is actually residing in the secure token transaction unit.

The demanding tasks include a denomination algorithm for selecting an appropriate combination of tokens, such as digital coins or value notes, to be used for payment transactions. Delegating demanding tasks allows achieving a reduction in the computational load on the secure token transaction unit.

According to an aspect of the invention, a terminal of an electronic payment transaction system is provided. The terminal may be a mobile computing device such as a smartphone, mobile tablet, or laptop. The electronic payment transaction system comprises at least one transaction unit, preferably a secure token transaction unit.

In addition, the terminal is connectable or connected to a communication device for performing payment transactions with another transaction unit. That is, if the communication device is accommodated in a terminal housing, as is the case with a smartphone, the communication device may be permanently connected to the terminal, but may also be temporarily disconnected from the terminal as required. If the communication device is not housed in the terminal enclosure, which may be the case with a mobile tablet, the communication device may be temporarily connected to the terminal, i.e. it may be connectable.

The terminal comprises a communication interface connected or connectable, i.e. adapted to be connected, to the transaction unit, thereby enabling bi-directional data communication of the terminal with the transaction unit, and a memory adapted to store data. In particular, the communication interface enables secure bi-directional communication between the secure token transaction unit and the terminal, thereby enhancing data security during transactions. The benefit is increased system security which minimises potential breaches during data exchange. In particular, the secure memory maintains data integrity by protecting it from unauthorised access or modification. The benefit is a robust system that can reliably store and retrieve data, increasing confidence in the system.

The terminal further comprises a control means, such as a processor, a microprocessor or a microcontroller. The control means may generally be responsible for ensuring transaction integrity, managing computational tasks and facilitating secure communication between the transaction unit and the terminal.

In one implementation, the terminal is adapted to receive and preferably process a delegation message that at least partially delegates the calculation of demanding tasks that require extensive computing resources, such as computing power and/or memory capacity. The terminal is further adapted to take over, preferably from the security element, at least part of the calculation of the demanding tasks from the secure token transaction unit.

In another implementation, the terminal is adapted to send a command to the secure token transaction unit to receive token information about tokens residing in the secure token transaction unit, the token information includes all information required at the terminal for a calculation of a denomination algorithm for selecting a combination of tokens to be used for payment transactions with another transaction unit, thereby reducing a computational load on the secure token transaction unit, and ii) to receive the token information within the terminal.

The demanding tasks include a denomination algorithm for selecting a combination of tokens to be used for payment transactions with another transaction unit. Preferably the combination is selected based on tokens that are residing in the secure token transaction unit. Residing means that the tokens are within the secure token transaction unit when The tokens may be coins and/or value notes. Taking over in the sense of processing at least partially the denomination algorithm by the terminal enables a computational load on the secure token transaction unit to be reduced.

According to an aspect of the invention, an electronic payment token transaction system is provided. The system comprises at least one secure token transaction unit as described above and at least one terminal as described above. The system further comprises a communication module connected or connectable to the terminal and adapted to enable transmission of a payment transaction to another terminal. Even if the communication module is located in the terminal housing, it is assigned to the transaction system from a logical and functional point of view and in view of its application in the transaction system.

According to one aspect of the invention, a global electronic payment token transaction system is provided. The global system comprises at least two electronic payment token transaction systems as described above. The electronic payment token transaction systems are connectable to each other via a communication network and are thus adapted to communicate and exchange data with each other.

According to an aspect of the invention, a method of relieving a secure token transaction unit of an electronic payment transaction system from time-consuming calculations associated with a secure payment transaction in the electronic payment transaction system is provided. The electronic payment transaction system comprises a secure token transaction unit, a terminal, and in particular a communication module.

The method comprises:
a) connecting the secure token transaction unit and the terminal to the communication module to enable performing a bi-directional data communication between the secure token transaction unit and the terminal;
b) entering a payment transaction amount to the terminal;
c) transmitting or transferring a delegation message and a token configuration including token values and corresponding sizes from the secure token transaction unit to the terminal;
d) performing on the terminal at least partially the denomination algorithm; and
e) transferring a selection result and the payment transaction amount from the terminal to the secure token transaction unit prior to initiating a payment transaction.

Step c) allows, based on the transmitted delegation message, at least partial delegation of the calculation of a denomination algorithm for selecting a combination of tokens to be used for payment transactions with another transaction unit. Step c) further allows, based on the transmitted token configuration, enabling the terminal to identify all available tokens without compromising user privacy. Based on the transmitted delegation message and the at least partial calculation delegation associated with the message, step d) is enabled to be performed.

According to an embodiment, the token configuration transmitted in step c) can be embedded in the delegation message.

According to an aspect of the invention, a non-transitory computer readable storage medium for tangibly storing computer program instructions capable of being executed by a processor is provided. The computer program instructions implement / execute the steps of the method described above.

Some effects and advantages relating to the secure token transaction unit, the terminal, the electronic payment token transaction system and the non-transitory computer readable storage medium are described as follows.

The entities of the present invention are secure entities. The term "secure" can be explained by means of some examples.
- The secure token transaction unit is designed to securely store tokens and perform secure transactions. It includes secure features such as a secure memory for safe data storage, contributing to the overall security of the system.
- The electronic payment system is secure based on the combined security measures of all its components, including secure token transaction units, terminals and secure communication interfaces. It also includes security protocols to ensure transaction integrity and user privacy.
- The terminal, such as a smartphone or laptop, contributes to the security of the system through communication interfaces, encrypted storage and secure delegation of computing tasks to reduce the risks associated with data manipulation or unauthorised access.
- The communication interface provides bi-directional data communication between the secure token transaction unit and the terminal. It can use secure communication protocols, such as Transport Layer Security (TLS), to ensure the secure transmission of sensitive data, minimising the risk of data breaches.
- The secure memory of the token transaction unit or terminal stores data in an encrypted form, preventing unauthorised access or modification of the data. The secure storage and retrieval of token denominations and their respective values ensures the security of the system.

Generating a message to delegate the computation of demanding tasks effectively delegates/offloads the computational burden from the secure token transaction unit to the terminal. This is particularly important for tasks that require significant computational resources, such as determining the combination of tokens for a transaction. Such delegation allows a significant reduction in the computational load on the secure token transaction unit, and advantageously allows the secure element, which must be technically as simple as possible since it is a mass product, to be implemented as a low-cost component.

In addition, by distributing computational tasks, the system can use the processing capabilities of multiple devices, i.e. the terminal and the secure token transaction unit, leading to an overall increase in the operational efficiency and performance of the system. As a result, transaction times can be reduced, contributing to an improved user experience.

In this way, the delegation process described not only increases system efficiency, but also extends the life of the secure token transaction unit by preventing computational overload and associated tear.

In one embodiment, the control means may be adapted to generate a request to at least partially delegate the calculation of payment instructions, thereby reducing the computational load on the secure token transaction unit, and to send the generated request to the terminal. This may enable efficient management of computational resources, thereby improving the performance and lifetime of the secure token transaction unit. It also may facilitate faster transaction processing by distributing the workload to the terminal, resulting in an improved user experience in the electronic payment system.

In one embodiment, the control means may be adapted to authenticate the selection result obtained at the terminal by performing the denomination algorithm, thereby ensuring the accuracy of the selected denominations prior to the payment transaction and improving transaction integrity. This may increase the security and reliability of the electronic payment system by verifying the selected tokens before the transaction is executed. It may help to prevent potential errors or fraud, ultimately contributing to user confidence in the payment system.

In one embodiment, the control means may be adapted to accept and/or execute the payment transaction instructions received from the terminal, thereby reducing the computational load on the secure token transaction unit. This may allow the resources of the secure token transaction unit to be conserved, thereby contributing to the efficiency and durability of the system.

In one embodiment, the control means may be adapted to manage the disclosure of token configurations to the terminal via the secure communication interface, thereby controlling the visibility of sensitive data to maintain user privacy. This may contribute to enhanced user privacy by regulating the disclosure of sensitive token configurations. Selective disclosure of data may minimise potential exposure to unauthorised access, further enhancing the security of the electronic payment system and promoting user confidence.

In one embodiment, the control means may be adapted to execute payment transaction orders through peer-to-peer interaction over a connection channel pairing users of the payment transaction system by means of the communication interface. Thus, secure payment transactions may be enabled without requiring the terminal to access all payment transaction information in order to maintain user privacy. This may promote a decentralised payment environment, making transactions more resilient to single-point failures. By using secure communication channels, transactions can be conducted in a secure and confidential manner.

In one embodiment, the secure memory may comprise i) a secure token inventory and/or ii) a secure data structure such as a hash map or array. Both may be adapted to store the tokens available for payment transaction and their respective values and counts, thereby enabling secure storage and retrieval of token denominations and their respective values. The secure token inventory and data structure may ensure robust, secure storage, making the system resilient against potential data corruption or loss. Thus, data organization and retrieval may be enhanced, contributing to efficient transaction execution.

In one embodiment, the communication interface may be adapted to use a secure communication protocol, such as Transport Layer Security, to establish a secure and reliable connection via the communication module. This may provide a safeguard against potential cyber threats such as data breaches or eavesdropping, thereby ensuring the reliability of the payment system.

In one embodiment, the terminal may comprise a user interface, such as a touch screen or physical buttons, enabling a user to enter the payment amount. This may increase the usability and accessibility of the terminal. Tactile elements, such as a touch screen or physical buttons, provide a versatile and intuitive user experience that promotes efficient use of the payment system.

In one embodiment, the terminal may comprise a display screen adapted to provide transaction details to the user.

In one embodiment, the terminal may be adapted to perform the part of the denomination algorithm calculation taken over from the secure token transaction unit, preferably to identify a combination of tokens that avoids a token split.

Token value splitting refers to the situation where a single token, such as a digital coin or note, must be split into smaller denominations to complete a transaction. Avoiding token value splitting is driven by the need for efficiency and simplicity in transactions, as splitting a token can require additional computing resources and time, resulting in slower transaction speeds and a more complex process. Avoiding token value splitting can result in faster transaction processing times by eliminating the need for complex calculations to split tokens. It also simplifies token tracking and management, as each token remains intact and can be accounted for individually. The benefits include an improved user experience due to faster transaction times and simpler token management. This can increase the overall usability of the system, making it more attractive to users. It can also reduce the computational load on the system, resulting in energy savings and extended device life.

In one embodiment, the terminal may be adapted to at least partially take over the calculation of payment transaction instructions from the secure token transaction unit, and preferably to perform the calculation of the taken over payment transaction instructions.

By taking over part of the denomination algorithm calculation and/or transaction instruction calculation, the computational load on the transaction unit may be reduced, allowing the hardware requirements for the transaction unit to be reduced and low-cost components to be used for the transaction unit.

In one embodiment, the terminal may be adapted to transmit data to the secure token transaction unit, the data preferably comprising the result of the selection algorithm and/or the payment transaction instructions. This may enable the completion of the preparation and execution of the payment transaction between two participants in the electronic payment transaction system.

In one embodiment, the terminal may be adapted to prevent security sensitive data from being displayed on the screen. This may prevent (accidental) disclosure of sensitive information on the screen, thereby protecting the privacy of the user.

In one embodiment, the terminal may be adapted to limit the number of tokens transferred from the secure token transaction unit, thereby protecting user privacy. This may reduce potential exposure by limiting the number of tokens shared, further enhancing user privacy and reducing the potential for data breaches.

In one embodiment, the terminal may be adapted to read from the secure token transaction unit, the data preferably comprising token configuration data such as values and sizes of the tokens.

In one embodiment, the secure token transaction unit and the terminal may be adapted to jointly implement a verification protocol to ensure the correctness of the selected token combinations. Preferably, the secure token transaction unit may be adapted to calculate a checksum, such as the total value of the selected tokens, and in particular to compare the checksum with the desired payment transaction amount, thereby detecting errors or modifications in the data set, thereby verifying the integrity of the data. The common implementation of a verification protocol enhances the overall integrity of the transaction. Through checksum calculations and comparisons, the system can effectively detect inaccuracies or potential tampering with the transaction data. This results in improved security and reliability of payment transactions, leading to increased user confidence in the system.

In one embodiment, performing the denomination algorithm may include performing at the terminal a selection process based on the card data, i.e. the token transaction unit, to determine an appropriate combination of tokens for the payment transaction amount to avoid token value splitting. In doing so, the denomination algorithm may use a selection process to find appropriate tokens for the payment transaction amount. The card data, which includes the token data in the inventory, forms the basis of this process. The technical effect of this process is to avoid splitting the token value, as token splitting can complicate the transaction, making it less efficient and potentially leading to errors or delays. Avoiding splits simplifies token management and improves the overall efficiency of the transaction. Performing this selection process at the terminal level, rather than at the secure token transaction unit, provides benefits such as reducing the computational load on the secure token transaction unit, enabling faster transactions and better resource allocation, and providing more robust handling of more complex calculations or larger data sets that could overwhelm the secure token transaction unit.

In one embodiment, a security check may be performed by comparing the sum of the selected tokens with the payment transaction amount and the remaining change amount, thereby ensuring the correctness of the selected tokens. The security check may increase the integrity and reliability of the transaction process by preventing errors or fraud. It can provide users and the payment system with confidence that transactions are being carried out correctly and securely, contributing to a trustworthy and efficient electronic payment environment.

In one embodiment, determining an appropriate combination of tokens may comprise generating a set of combinations of tokens that add up to the payment transaction amount using a dynamic programming or brute force algorithm. Dynamic programming increases efficiency by breaking the problem into sub-problems and storing intermediate results, while brute force ensures an exhaustive search for a solution. This provides versatility in addressing different scenarios, providing optimal or near-optimal token combinations, thereby increasing transaction efficiency, potentially reducing processing time and improving the overall user experience.

In one embodiment, determining an appropriate combination of tokens may include prioritising high value tokens, thereby optimising the selection process by reducing the number of tokens required to achieve the payment transaction amount. Reducing the number of tokens reduces the computational load and processing time, thereby improving the efficiency and speed of transactions, potentially resulting in improved system performance and user experience.

In one embodiment, determining an appropriate combination of tokens may include evaluating a number of proofs related to each selected token by accessing a proof information associated with each token. A proof may be a piece of data that allows the authenticity of a token (token transaction) to be verified, and preferably may comprise at least one of: a digital signature, a hash, a Merkle tree. A hash may guarantee data integrity, and a Merkle tree may guarantee data consistency. By evaluating these proofs, the system can ensure that each selected token is legitimate and secure, thereby increasing the security of the transaction, preventing fraud and maintaining confidence in the electronic payment system.

In one embodiment, determining an appropriate combination of tokens may include providing a selection list by determining a value-to-proof ratio for each token having a particular value and number of proofs, sorting the value-to-proof ratios in descending order, and inserting the result of the sorting into the selection list. The value-to-proof ratio may essentially reflect the value of the token relative to its associated security level, and the sorted list may give preference to tokens with a higher value-to-proof ratio. This approach may enable efficient selection of tokens for a transaction, ensuring an optimal trade-off between transaction value and security level, thereby enhancing both transaction efficiency and security in the electronic payment transaction system. In one embodiment, the appropriate combination of tokens can be determined by the following process: i) iteratively evaluating the payment transaction amount against the selection list, starting with the highest value-to-proof ratio, and ii) verifying that each token can be part of the final selection without exceeding the payment transaction amount, until a token with its value-to-proof ratio exceeds the remaining payment transaction amount, and iii) preferably selecting the next lower value-to-proof ratio in the sorted structure if a token valued by its value-to-proof ratio exceeds the remaining payment transaction amount, thereby minimising the number of proofs involved.

The process starts with the token with the highest value-to-proof ratio from the selection list and checks whether adding this token would exceed the transaction amount. The process repeats with the remaining tokens, in descending order of value-to-proof ratio, until a token would cause the transaction amount to be exceeded. This approach ensures efficient use of tokens, minimises the number of tokens and maintains transaction security.

In one embodiment, determining an appropriate combination of tokens may include performing a greedy approach to approximate a sum of tokens as close as possible to the payment transaction amount when no combination of tokens can satisfy the payment transaction amount. The greedy approach typically selects the most promising option at each step, such as the highest value token that does not exceed the remaining amount, which increases efficiency and optimises resource utilisation, although it may not always provide an exact/perfect solution.

In one embodiment, determining an appropriate combination of tokens may include iteratively selecting combinations of tokens where the highest token does not exceed the remaining payment transaction amount in each iteration until the remaining amount is minimised. This approach can ensure that a payment transaction is completed when exact token combinations are not yet available. At each step, a combination of tokens can be selected to ensure that the highest token value does not exceed the remaining amount. This process continues until the remaining transaction amount is as small as possible. This allows partial completion of a payment transaction when exact token combinations are not available, facilitating continuous transactions and improving system efficiency.

In one embodiment, the method may comprise the terminal calculating only a subset of tokens based on the amount to be paid and the availability of high value tokens on the card. By limiting the scope of the calculation to a relevant subset, computational efficiency is improved and processing time is reduced, thereby improving the overall performance of the payment transaction system while still ensuring accurate and efficient payment processing.

In one embodiment, the method may comprise performing a supervised machine learning algorithm on the terminal using pre-tagged data for training. In this process, the input data may include tokens, proofs and payment transaction amounts, and the expected output may include the minimum number of tokens to be transmitted during a payment transaction. A training process may allow the algorithm to learn patterns and relationships between input data and corresponding output data, i.e. the minimum number of tokens required for a transaction. After successful training, the algorithm can generalise from its learned patterns to predict the minimum number of tokens required for new, unseen transactions.

Machine learning is a branch of artificial intelligence that leverages data to improve computer performance by giving machines the ability to "learn".

Machine learning algorithms build a model based on sample data, known as training data, in order to make predictions or decisions without being explicitly programmed to do so.

In one embodiment, the method may comprise performing a reinforcement learning algorithm (RLA) on the terminal to adapt the denomination algorithm to user input to improve user experience by ensuring feedback responsiveness. In this approach, the RLA may be performed by learning from user feedback on issues such as transaction speed. RLA is a trial-and-error learning algorithm where an agent learns to behave by performing actions and observing the results of those actions. The agent receives either rewards or penalties for its actions, and the goal of the algorithm is to maximise the total reward it receives over time. The RLA learns and adapts based on user feedback on elements such as transaction speed, making the payment system more efficient and responsive over time and tailoring it to individual user preferences and behaviours.

In one embodiment, performing a payment transaction from a payer secure token transaction unit to a recipient secure token transaction unit of the electronic payment transaction system may comprise:
- initiating a payment transaction by sending a PAY command to the payer secure token transaction unit, and/or
- transmitting, from the payer secure token transaction unit to the recipient secure token transaction unit, the payment transaction and change amounts and performing additional consistency checks to ensure transaction integrity.

Further advantages and features of the present disclosure are apparent from the dependent claims, the description and the accompanying drawings.

### Brief description of the drawings

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:
Fig. 1 shows a symbol diagram of a secure token transaction unit within a an electronic payment transaction system according to the invention;
Fig. 2 shows a symbol diagram of a terminal of an electronic payment transaction system according to the invention;
Fig. 3 shows a symbol diagram of the method of relieving a token transaction unit from time-consuming calculations according to the invention;
Fig. 4a shows a symbol diagram of an electronic payment token transaction system according to the invention; and
Fig. 4b shows a symbol diagram of a global electronic payment token transaction system according to the invention.

### Detailed description of embodiments

Reference will now be made in detail to the various embodiments, one or more examples of which are illustrated in each figure. Any embodiment may be combined with any other embodiment, if technically reasonable and/or allowed. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

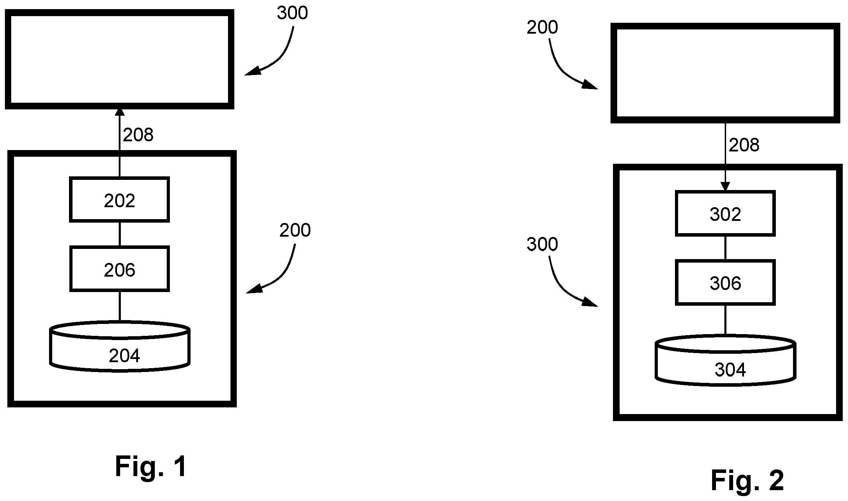

Fig. 1 shows an exemplary embodiment of a secure token transaction unit 200 within an electronic payment transaction system 100. The secure token transaction unit 200 may be a secure element or a chip card.

The token transaction unit 200 is connected or connectable to a terminal 300, preferably a terminal 300 of the electronic payment transaction system 100. The terminal 300 may refer to a computing device such as a smartphone, laptop or mobile tablet that is connectable to other devices or networks. In the present context, it is specifically connectable to a secure token transaction unit 200 to perform payment transactions.

In most commercially available terminals 300, such as smartphones, mobile tablets or laptops, the token transaction unit 200, e.g. a chip card, is physically integrated into the terminal 300. In these cases, the token transaction unit 200 is connected, preferably permanently connected, to the terminal 300. However, there are also cases where the token transaction unit 200 is not integrated into the terminal 300, for example where the token transaction unit 200 is brought to the terminal 300 via a card reader and is connectable to the terminal 300; in such cases the token transaction unit 200 is connectable, i.e. temporarily connected, to the terminal 300.

By means of the terminal 300, the token transaction unit 200 is in an operational state, which preferably implies that the terminal 300 provides the token transaction unit 200 with the requirements necessary for the operation of the token transaction unit 200, such as power supply, physical housing, mechanical protection.

The secure token transaction unit 200 comprises a (secure) communication interface 202 adapted to enable bi-directional data communication between the secure token transaction unit 200 and the terminal 300, and a secure memory 204 for storing data. In particular, the secure communication interface 202 enables the secure token transaction unit 200 to interact with the terminal 300 in a secure manner, thereby enhancing data security during transactions. The benefit is enhanced system security, minimizing potential breaches during data exchange. Especially, the secure memory 204 maintains data integrity by protecting it from unauthorized access or modifications. The benefit is a robust system that can reliably store and retrieve data, increasing trust in the system.

The secure token transaction unit 200 further comprises control means 206 such as a processor, microprocessor or microcontroller. The control means 206 may generally be responsible for ensuring transaction integrity, managing computational tasks and facilitating secure communication between the transaction unit 200 and the terminal 300.

The control means 206 is adapted to i) generate a delegation message 208 for at least partially delegating the calculation of demanding tasks that require extensive computing resources, such as computing power and/or memory capacity, and ii) send the generated delegation message 208 to the terminal 300.

The demanding tasks include a denomination algorithm for selecting an appropriate combination of tokens, such as digital coins or value notes, to be used for payment transactions. Delegating demanding tasks allows achieving a reduction in the computational load on the secure token transaction unit 200.

Fig. 2 shows an exemplary embodiment of a terminal 300 of an electronic payment transaction system 100. The terminal 300 may be a mobile computing device such as a smartphone, mobile tablet or laptop. The electronic payment transaction system 100 comprises at least one transaction unit, preferably a secure token transaction unit 200.

Preferably, the terminal 300 is adapted to accommodate a token transaction unit 200 such as a chip card; in some cases, the chip card may be brought to the terminal 300 from the outside and may be temporarily connected to the terminal 300 via a card reader.

In addition, the terminal 300 is connectable or connected to a communication module 400 for performing payment transactions with another transaction unit 200. That is, if the communication module 400 is accommodated in a terminal housing, as is the case with a smartphone, the communication module 400 may be permanently connected to the terminal 300, but may also be temporarily disconnected from the terminal 300 as required. If the communication module 400 is not housed in the terminal enclosure, which may be the case with some mobile tablets, the communication module 400 may be temporarily connected to the terminal 300, i.e. it may be connectable.

The terminal 300 comprises a secure communication interface 302 connected or connectable, i.e. adapted to be connected, to the transaction unit 200, thereby enabling bi-directional data communication of the terminal 300 with the transaction unit 200, and a memory 304 adapted to store data. In particular, the secure communication interface 302 enables secure bi-directional communication between the secure token transaction unit 200 and the terminal 300, thereby enhancing data security during transactions. The benefit is increased system security which minimises potential breaches during data exchange. In particular, the secure memory 304 maintains data integrity by protecting it from unauthorised access or modification. The benefit is a robust system that can reliably store and retrieve data, increasing confidence in the system.

The terminal 300 further comprises a control means, such as a processor, a microprocessor or a microcontroller 306. The control means 306 may generally be responsible for ensuring transaction integrity, managing computational tasks and facilitating secure communication between the transaction unit 200 and the terminal 300.

The terminal 300 is adapted to receive and preferably process a delegation message 208 that at least partially delegates the calculation of demanding tasks that require extensive computing resources, such as computing power and/or memory capacity. The terminal 300 is further adapted to take over, preferably from the security element, at least part of the calculation of the demanding tasks from the secure token transaction unit 200.

The demanding tasks include a denomination algorithm for selecting a combination of tokens to be used for payment transactions with another transaction unit 200. The tokens may be coins and/or value notes. Taking over in the sense of processing at least partially the denomination algorithm by the terminal 300 enables a computational load on the secure token transaction unit 200 to be reduced.

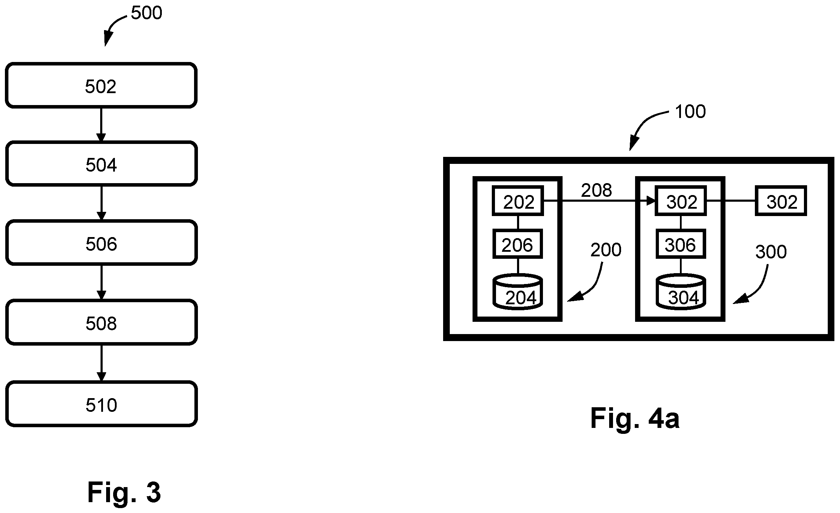

Fig. 3 shows an exemplary embodiment of the method 500 of relieving a token transaction unit 200 from time-consuming calculations of relieving a secure token transaction unit 200 of an electronic payment transaction system 100 from time-consuming calculations associated with a secure payment transaction in the electronic payment transaction system 100 is provided. The electronic payment transaction system 100 comprises a secure token transaction unit 200, a terminal 300, and in particular a communication module 400.

The method 500 comprises:
a) establishing 502 a bi-directional data communication between the secure token transaction unit 200 and the terminal 300;
b) receiving 504 a payment transaction amount in the terminal 300, preferably by receiving a user entry;
c) transmitting or transferring 506 a delegation message 208 and a token configuration including token values and corresponding sizes from the secure token transaction unit 200 to the terminal 300;
d) performing 508 on the terminal 300 at least partially the denomination algorithm; and
e) transferring 510 a selection result and the payment transaction amount from the terminal 300 to the secure token transaction unit 200 prior to initiating a payment transaction.

Step c) allows, based on the transmitted delegation message 208, at least partial delegation of the calculation of a denomination algorithm for selecting a combination of tokens to be used for payment transactions with another transaction unit 200. Step c) further allows, based on the transmitted token configuration, enabling the terminal 300 to identify all available tokens without compromising user privacy. Based on the transmitted delegation message 208 and the at least partial calculation delegation associated with the message, step d) is enabled to be performed.

Preferably, the token configuration transmitted in step c) can be embedded in the delegation message 208.

Fig. 4a shows an exemplary embodiment of an electronic payment token transaction system 100. The system 100 comprises at least one secure token transaction unit 200 as described above and at least one terminal 300 as described above. The system 100 further comprises a communication module 400 connected or connectable to the terminal 300 and adapted to enable transmission of a payment transaction to another terminal 300. Even if the communication module 400 is located in the terminal housing, it is assigned to the transaction system 100 from a logical and functional point of view and in view of its application in the transaction system 100.

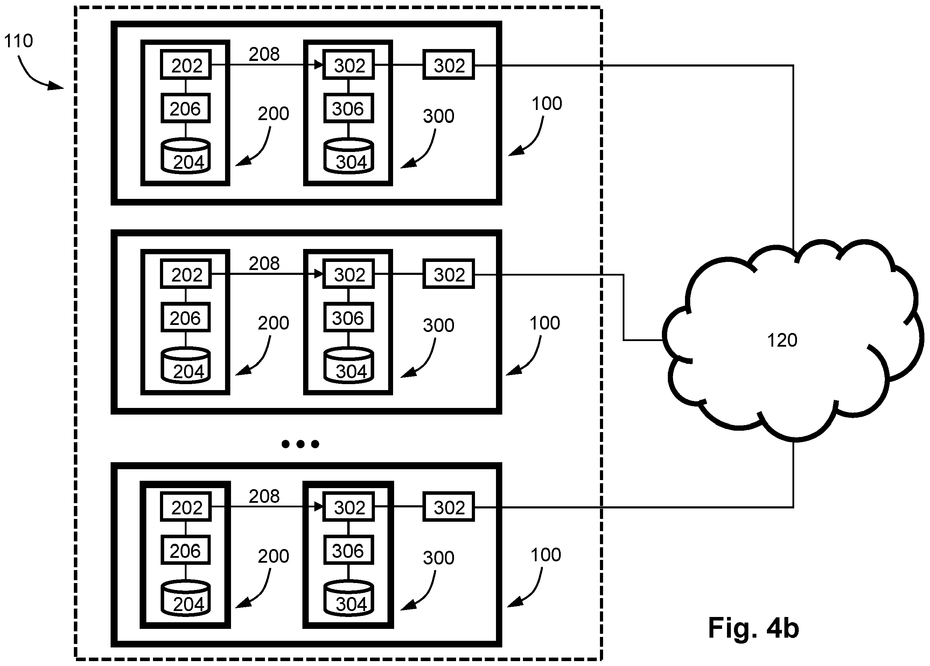

Fig. 4b shows a an exemplary embodiment of a global electronic payment token transaction system 110. The global system 110 comprises at least two electronic payment token transaction systems 100 as described above. The electronic payment token transaction systems 100 are connectable to each other via a communication network.

The global electronic payment token transaction system 110 enables the payment transactions to be carried out from a service customer to a service provider, wherein the service customer is part of a first payment token transaction system 100, the service provider is part of a second payment token transaction system 100, and the two systems are connected via the communication network 120, which is preferably a wide area network (WAN) or a local area network (LAN), both implemented as a mobile or fixed network.

### Particular embodiment

This embodiment addresses the issue of a terminal-based denomination algorithm. The problem to be solved relates to the computational load on a payer's smart card / chip card to produce a subset of denominations to satisfy a given payment amount. Ideally, the payer's smart card should not have to perform a SPLIT to avoid additional verification and should be able to select the exact combination of denominations/value notes. This process is challenging, especially when there are a large number of denominations and a high payment amount.

The invention proposes to use the computing power of a terminal or mobile application for the selection algorithm. The user enters the payment amount on the terminal screen. Before the payment is made, the terminal or mobile application reads the note configuration from the card and obtains information on the note values and their sizes. This information is kept off-screen to protect the user's privacy.

Before sending a PAY command to the payer's card, the terminal runs the selection algorithm on the card data and identifies a combination of notes that would avoid a value note split. Together with the payment amount, the terminal sends this selection result to the payer's card. The payer's card then selects the notes requested by the terminal, checks the sum of the selected notes against the payment amount and, if there is a mismatch, does not proceed with the payment or overrides the terminal's remaining change with a simple greedy algorithm.

Variations on this solution include limiting the disclosure of tokens on the card, such as only disclosing a certain number of tokens, or not transmitting value tokens that already exceed the amount to be paid. The terminal may not need to calculate the full set of tokens but can deduce the value of the amount to be paid in advance. Payments may involve exchanges where both cards reveal their value tokens, and an adaptive selection algorithm may be used.

As for the announcement to the terminal, different methods can be used, such as sending each value. If the denomination is fixed, a bit array can represent the presence of a token of a given value. The terminal can be directly or indirectly involved in various ways. For example, wallet-to-terminal payment (including a secure wallet inside a terminal with an independent CPU), wallet-to-wallet payment via the user interface terminal, wallet-to-wallet payment via a terminal channel, and payments involving two devices (such as two smartphones or a smartphone and an offline POS terminal) where the payer device calculates the solution directly.

The selection algorithm aims to optimise the process of handling multiple value notes (MVN) in a smart card or similar transaction unit such as a mobile wallet. The aim is to minimise the amount of data transferred during a transaction, while meeting the payment amount and managing the value note inventory.

The value notes are stored in the hardware wallet, sorted in descending order by the ratio of note value to number of notes (note value/number of notes). This arrangement prioritises high denomination notes with less denomination notes at the top of the note list.

For a payment, the sending wallet selects notes from the top of its list using a greedy selection algorithm. The receiving wallet then inserts the incoming denomination notes at the appropriate place in its list of notes. This algorithm may not produce an optimal result in all cases, but it is considered satisfactory.

An example is provided to illustrate this selection algorithm:
Consider the following input of value notes
vn1=4, vn2=12, vn3=4, vn4=4, vn5=9, vn6=21, vn7=8, vn8=14, vn9=6 and the proofs are prf=6, prf=7, prf=6, prf=16, prf=12, prf=9, prf=18, prf=21.

They are sorted according to the ratio of value note to proof (vn/prf)*100, resulting in the following order: vn6=21, vn2=12, vn7=8, vn8=14, vn1=4, vn3=4, vn4=4, vn5=9, vn9=6.

Assuming a payment amount of 36, the greedy algorithm would choose three denominations from the start {vn6=21, vn2=12, vnsplit(split of vn7)=3} to reach the amount of 36, resulting in a total number of proofs transferred of 29.

However, the optimal solution in this case would be to use three value notes {vn6=21, vn2=12, vnsplit(split of vn1)=3}, with a total number of proofs transferred of 26.

However, finding an algorithm that consistently finds the optimal solution may require a potentially excessive amount of computing resources. Therefore, it might be preferable to stick with a "good enough" solution, such as the one provided by the greedy selection algorithm.

### Reference signs

- 100: electronic payment transaction system
- 110: global electronic payment transaction system
- 120: communication network
- 200: token transaction unit
- 202: communication interface of the token transaction unit
- 204: memory of the token transaction unit
- 206: control means, processor, microprocessor of the token transaction unit
- 208: delegation message
- 210: token transaction unit of a service customer
- 212: token transaction unit of a service provider
- 300: terminal, smartphone, mobile tablet, laptop
- 302: communication interface of the terminal
- 304: memory of the terminal
- 306: control means, processor, microprocessor of the terminal
- 400: communication module
- 500: method of relieving a token transaction unit from time-consuming calculations
- 502: establishing a bidirectional communication between secure token transaction unit and terminal
- 504: Receiving a payment transaction amount in the terminal
- 506: transmitting a token configuration
- 508: performing on the terminal at least partially the denomination algorithm
- 510: transferring a selection result and the payment transaction amount

## Claims

1. A secure token transaction unit (200), such as a secure element, within an electronic payment transaction system (100), the token transaction unit (200) being connected or connectable to a terminal (300) by means of which the token transaction unit (200) is in an operative state, the secure token transaction unit (200) comprising:
- a communication interface (202) adapted to enable bi-directional data communication between the secure token transaction unit (200) and the terminal (300);
- a secure memory (204) for storing data; and
- a control means (206), such as a processor, a microprocessor or a microcontroller, adapted i) to generate a delegation message (208) that at least partially delegates the calculation of a denomination algorithm for selecting a combination of tokens to be used for payment transactions with another transaction unit, preferably based on the tokens residing in the secure token transaction unit (200), thereby reducing a computational load on the secure token transaction unit (200), and ii) to send the delegation message (208) to the terminal (300); or
- the control means (206), such as a processor, a microprocessor or a microcontroller, adapted i) to receive a command from the terminal (300) to provide a token information about tokens residing in the secure token transaction unit (200), the token information includes all information required at the terminal for a calculation of a denomination algorithm for selecting a combination of tokens to be used for payment transactions with another transaction unit, thereby reducing a computational load on the secure token transaction unit (200), and ii) to send the token information to the terminal (300).

2. The secure token transaction unit (200) of claim 1, wherein the control means (206) is adapted to implement at least one of the following operations:
- authenticate the selection result obtained at the terminal (300) by performing the denomination algorithm, thereby ensuring the accuracy of the selected denominations prior to the payment transaction and improving transaction integrity;
- accept and/or execute the payment transaction instructions received from the terminal (300), thereby reducing the computational load on the secure token transaction unit (200);
- manage the disclosure of token configurations to the terminal (300), by means of the communication interface (202), thereby controlling the visibility of sensitive data to maintain user privacy.

3. The secure token transaction unit (200) according to claim 1 or 2,
wherein the control means (206) is adapted to execute payment transaction orders through a peer-to-peer interaction over a connection channel connecting users of the payment transaction system pairwise by means of the communication interface (202),
thereby enabling secure payment transactions without requiring the terminal (300) to access all the payment transaction information in order to maintain user privacy.

4. The secure token transaction unit (200) according to one of the preceding claims, wherein
- the secure memory (204) comprises i) a secure token inventory and ii) a secure data structure for the terminal (300) such as a hash map or array, adapted to store the tokens available for payment transaction and their respective values and counts, thereby enabling secure storage and retrieval of token denominations and their respective values; and/or
- the communication interface (202) is adapted to use a communication protocol, such as Transport Layer Security, for establishing a secure and reliable connection via the communication module (400).

5. A terminal (300), in particular a mobile computing device such as a smartphone, mobile tablet, or laptop, of an electronic payment transaction system (100) comprising at least one transaction unit, preferably a secure token transaction unit (200), the terminal (300) being connectable or connected to a communication module (400) for performing payment transactions with another transaction unit, the terminal (300) comprising:
- a communication interface (302) connected or connectable to the transaction unit (200), thereby enabling bi-directional data communication of the terminal (300) with the transaction unit (200);
- a memory (304) adapted for storing data; and
- a control means (306), such as a processor, a microprocessor or a microcontroller, the terminal (300) being adapted to i) receive and process a delegation message (208) which at least partially delegates the calculation of a denomination algorithm for selecting a combination of tokens, such as coins and/or value notes, to be used for a payment transaction, and ii) take over at least part of the calculation of the denomination algorithm from the secure token transaction unit (200) based on the delegation message (208), thereby reducing a computational load on the secure token transaction unit (200) or
- the terminal (300) being adapted i) to send a command to the secure token transaction unit (200) to receive token information about tokens residing in the secure token transaction unit (200), the token information includes all information required at the terminal (300) for a calculation of a denomination algorithm for selecting a combination of tokens to be used for payment transactions with another transaction unit, thereby reducing a computational load on the secure token transaction unit (200), and ii) to receive the token information within the terminal (300).

6. The terminal (300) according to claim 5, further comprising at least one of:
- a user interface (308) such as a touchscreen or physical buttons enabling a user to enter the pay amount;
- a display screen (310) adapted to provide transaction details to the user.

7. The terminal (300) according to claim 5 or 6, wherein the terminal (300) is adapted to implement at least one of the following operations:
- perform the part of the denomination algorithm calculation taken over from the secure token transaction unit (200), preferably to identify a combination of tokens that avoids a token split;
- at least partially take over the calculation of payment transaction instructions from the secure token transaction unit (200), and preferably to perform the calculation of the token over payment transaction instructions.

8. The terminal (300) according to one of the claims 5 to 7, wherein the terminal (300) is adapted to implement at least one of the following operations:
- transmit data to the secure token transaction unit (200), the data preferably comprising the result of the selection algorithm and/or the payment transaction instructions;
- prevent displaying security sensitive data on the display screen;
- read from the secure token transaction unit (200) the data, preferably comprising token configuration data such as values and sizes of the tokens;
- limit the number of tokens transmitted from the secure token transaction unit (200), thereby protecting user privacy.

9. An electronic payment token transaction system (100) comprising a secure token transaction unit (200) according to one of the claims 1 to 4, a terminal (300) according to one of the claims 5 to 8, and a communication module (400) connected or connectable to the terminal (300) and adapted to allow transmitting a payment transaction to another terminal (300) .

10. The electronic payment token transaction system (100) according to claim 9,
wherein the secure token transaction unit (200) and the terminal (300) are adapted to jointly implement a verification protocol to ensure the correctness of the selected token combinations,
wherein the secure token transaction unit (200) is adapted to calculate a checksum such as the total value of the selected tokens, and preferably to compare the checksum with the desired payment transaction amount,
thereby detecting errors or modifications in the data set, thus verifying the integrity of the data.

11. A global electronic payment token transaction system (110) comprising at least two electronic payment token transaction systems (100) according to claims 9 or 10, the electronic payment token transaction systems (100) being connectable to each other via a communication network (120).

12. A method (500) of relieving a token transaction unit (200) of an electronic payment transaction system (100) comprising a secure token transaction unit (200) and a terminal (300) from time-consuming calculations associated with a secure payment transaction in the electronic payment transaction system (100), the method (500) comprising:
- establishing (502) a bi-directional data communication between the secure token transaction unit (200) and the terminal (300);
- Receiving (504) a payment transaction amount in the terminal (300);
- transmitting (506) a token configuration including token values and corresponding sizes from the token transaction unit (200) to the terminal (300), thereby i) at least partially delegating the calculation of a denomination algorithm for selecting a combination of tokens to be used for payment transactions with another transaction unit, based on the delegation message (208), and ii) enabling the terminal (300) to identify all available tokens without compromising user privacy, based on the token configuration;
- performing (508) on the terminal (300) at least partially the denomination algorithm; and
- transferring (510) a selection result and the payment transaction amount from the terminal (300) to the secure token transaction unit (200) prior to initiating a payment transaction in the secure token transaction unit (200).

13. The method (500) according to claim 12, further comprising at least one of:
- performing the denomination algorithm includes performing at the terminal (300) a selection process based on the card data to determine an appropriate combination of tokens for the payment transaction amount to avoid a token value split;
- performing a security check by comparing the sum of the selected tokens with the payment transaction amount and the remaining change amount, thereby ensuring the correctness of the selected tokens;
- calculating by the terminal (300) only a subset of tokens based on the amount to be paid and the high value token availability on the card;
- performing on the terminal (300) a supervised machine learning algorithm by using pre-tagged data for training, the input data including tokens, proofs and payment transaction amounts, and the output data including the minimum number of tokens to be transmitted during a payment transaction;
- performing on the terminal (300) a reinforcement machine learning algorithm to adapt the denomination algorithm to user input to improve the user experience by ensuring responsiveness to feedback, wherein the learning algorithm is performed by learning from user feedback on issues such as transaction speed.

14. The method (500) according to claim 12 or 13, wherein determining an appropriate combination of tokens comprises at least one of:
- generating a set of combinations of tokens that add up to the payment transaction amount by using a dynamic programming or brute force algorithm;
- prioritizing high value tokens, thereby optimising the selection process by reducing the number of tokens required to reach the payment transaction amount;
- evaluating a number of proofs related to each selected token by accessing a proof information associated with each token, preferably wherein a proof is a piece of data allowing to verify the authenticity of a transaction, in particular wherein the proof comprises at least one of: a digital signature, a hash, a Merkle tree;
- providing a selection list by determining, for each token having a particular value and number of proofs, a value-to-proof ratio, sorting the value-to-proof ratios in descending order, and inserting the result of the sorting into the selection list;
- iteratively assessing the payment transaction amount against the selection list, starting with the highest value-to-proof ratio, and verifying that each token can be part of the final selection without exceeding the payment transaction amount, until a token with its value-to-proof ratio exceeds the remaining payment transaction amount, and preferably selecting the next lower value-to-proof ratio in the sorted structure if a token valued by its value-to-proof ratio exceeds the remaining payment transaction amount, thereby minimising the number of proofs involved;
- performing a greedy approach to approximate a sum of tokens as close as possible to the payment transaction amount if no combination of tokens can satisfy the payment transaction amount;
- iteratively selecting combinations of tokens where the highest token does not exceed the remaining payment transaction amount in each iteration until the remaining amount is minimised, ensuring that a payment transaction can be made if exact token combinations are not yet available.

15. A non-transitory computer readable storage medium for tangibly storing computer program instructions capable of being executed by a processor, the computer program instructions implementing the steps of one of the preceding method claims.
